(19) Europäisches Patentamt

European Patent Office

Office européen des brevets

(11) **EP 1 468 782 B1**

(12) **EUROPÄISCHE PATENTSCHRIFT**

(45) Veröffentlichungstag und Bekanntmachung des Hinweises auf die Patenterteilung:
**10.08.2011  Patentblatt 2011/32**

(51) Int Cl.:
*B23Q 17/09* (2006.01)      *B23D 59/00* (2006.01)
*G01B 21/10* (2006.01)

(21) Anmeldenummer: **03405255.5**

(22) Anmeldetag: **14.04.2003**

(54) **Verfahren zur automatischen Bestimmung des Durchmessers eines von einem Motor angetriebenen rundscheibenartigen Werkzeugs**

Method to automatically determine the diameter of a disc shaped tool driven by a motor

Méthode pour determiner automatiquement le diamètre d'un outil en forme de disque entrainé par un moteur

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**20.10.2004  Patentblatt 2004/43**

(73) Patentinhaber: **HILTI Aktiengesellschaft**
**9494 Schaan (LI)**

(72) Erfinder:
• **Schittl, Josef**
**6712 Thüringen (AT)**
• **Sever, Eduard**
**6713 Ludesch (AT)**
• **Studer, Georg**
**6712 Thüringen (AT)**
• **Flock, Marcus**
**66636 Tholey (DE)**

• **Veik, Günther**
**6841 Mäder (AT)**
• **Schaer, Roland**
**9472 Grabs (CH)**
• **Würsch, Christoph**
**9470 Werdenberg (CH)**

(74) Vertreter: **Wildi, Roland et al**
**Hilti Aktiengesellschaft,**
**Corporate Intellectual Property**
**Feldkircherstrasse 100**
**Postfach 333**
**9494 Schaan (LI)**

(56) Entgegenhaltungen:
**DE-A- 4 312 162    US-A- 3 938 041**
**US-A- 4 820 962**

## Beschreibung

Die Erfindung betrifft ein Verfahren zur automatischen Bestimmung des Durchmessers eines von einem Motor angetriebenen rundscheibenartigen Werkzeugs, insbesondere eines Sägeblatts für eine automatische Wandsäge.

Die Erfindung bezieht sich außerdem auf eine automatische Wandsäge, bei der die Einstellung optimaler Schnittparameter, insbesondere der Schnittlänge und Schnitttiefe, unter Anwendung des erfindungsgemäßen Verfahrens erfolgt.

Eine automatische Wandsäge ist in der Regel als Roboter mit zwei Freiheitsgraden realisiert. Diese Freiheitsgrade sind der Vorschub x der Antriebseinheit auf einem Schlitten und der Schwenkwinkel $\phi$ eines beispielsweise an einem Motor oder Getriebegehäuse angelenkten Schwenkarms, an dessen freiem Ende das Sägeblatt drehbar gelagert ist. Für einen automatischen Sägeprozess bei Wandsägen ist es notwendig, den Sägeblattdurchmesser zu kennen, weil unter anderem die Schnitttiefe t und die Schnittlänge davon abhängen. Zudem ist bei Kenntnis des Sägeblattdurchmessers die Einstellung einer optimalen Schnittgeschwindigkeit möglich. Letzteres gilt im Prinzip auch für kleinere Elektrowerkzeuge wie Kreissägen, Trennschleifer und dergleichen.

Es ist bei Elektrowerkzeugen bekannt, die auswechselbaren Werkzeuge mit einer Kodierung zu versehen, die Informationen über spezifische Merkmale des Werkzeugs enthält. Dieser Kodierung ist eine Ableseeinrichtung bzw. ein Sensor zugeordnet ist, so dass aufgrund der werkzeugspezifischen Information auswählbare Betriebsparameter der Antriebseinheit für das betreffende Werkzeug optimiert werden können. Es sind dafür unterschiedliche Dualitäten von Kodierung und Ablesung bekannt, nämlich mechanische, optische, magnetische, induktive oder solche mittels Transponder.

So beschreibt die DE 37 20 512 A1 ein Handgerät mit einer lösbar mit einer Antriebswelle verbundenen Aufnahme für Werkzeuge, deren Einsteckende nutenförmige Ausnehmungen aufweist, die in radial verschiebbare Verriegelungselemente in der Werkzeugaufnahme eingreifen. Die Verriegelungselemente werden durch eine verdrehbar die Werkzeugaufnahme umschließende Betätigungshülse in Eingriff mit dem Werkzeug gehalten. Um die Verriegelung zu lösen, wird die Betätigungshülse soweit verdreht, dass die Verriegelungselemente radial auswärts in Vertiefungen in der Betätigungshülse eintauchen und dadurch außer Eingriff mit dem Werkzeug gelangen. In definierter Drehlage zu den Verriegelungselementen sind in der Werkzeugaufnahme radial bewegliche Steuerelemente angeordnet, denen am Einsteckende des Werkzeugs Längsnuten zugeordnet sind, so dass die Steuerelemente unter Federwirkung in radialer Richtung in diese Längsnuten eindringen können. Den Steuerelementen sind Schwenkhebel zugeordnet, die die radiale Lage des Steuerelements abgreifen und deren eines Ende einen dementsprechend veränderlichen radialen Abstand von einem feststehend im Gerätegehäuse positionierten Sensor einnimmt, an dem sich bei einer Drehung der Werkzeugaufnahme diese Enden der Schwenkhebel vorbeibewegen und dadurch den Sensor induktiv beeinflussen. Die Hebelenden können unterschiedlich große, die Sensoren beeinflussende Wirkflächen aufweisen. Entsprechend den im Sensor erzeugten Schaltsignalen werden dem jeweils eingesetzten Werkzeug angepasste Betriebsparameter des Geräts, z. B. bei einem Bohrhammer die Drehzahl und die Schlagzahl, eingestellt.

Gegenstand der DE 37 21 771 A1 ist ein Handgerät, das ebenfalls eine lösbar mit einer Antriebswelle verbundene Aufnahme für Werkzeuge aufweist. Deren Einsteckende ist mit einem angepassten Aufnahmekörper für das betreffende Werkzeug versehen, dessen Arbeitsdurchmesser stark variieren kann, weshalb sich für die Einsteckenden der genannten Art zwei unterschiedliche Durchmesser durchgesetzt haben. Um alle diese Werkzeuge mit einem Handgerät verwenden zu können, lassen sich wahlweise zwei diesen unterschiedlichen Durchmessern angepasste Werkzeugaufnahmen gegeneinander austauschen und drehfest mit der Antriebswelle verbinden. Die in die Ausnehmungen der Werkzeuge eingreifenden Verriegelungselemente sind durch eine relativ zum Aufnahmekörper verdreh- oder verschiebbare Verriegelungshülse radial verschiebbar. In weiteren Durchbrüchen des Aufnahmekörpers sind gegen die Verriegelungshülse radial verschiebbare Steuerelemente angeordnet, die in einer ersten radialen Position, in welcher sie in am Werkzeug ausgebildete Ausnehmungen eintauchen, ein Verdrehen oder Verschieben der Verriegelungshülse zulassen, während sie in einer zweiten radialen Position eine solche Bewegung der Verriegelungshülse sperren. Damit ein Werkzeug in die Aufnahme eingesetzt werden kann, müssen die Verriegelungselemente und die Steuerelemente aus dem für die Aufnahme des jeweiligen Einsteckendes der Werkzeuge bestimmten Querschnitt entfernt werden, wodurch die Verriegelungshülse entgegen einer Rückstellkraft soweit bewegt wird, dass die Verriegelungselemente und die Steuerelemente radial auswärts in einen erweiterten Bereich der Verriegelungshülse einrasten können. Ist das Werkzeug vollständig in die Werkzeugaufnahme eingesetzt, wird die Verriegelungshülse freigegeben und bewegt sich unter der Wirkung der Rückstellkraft in Richtung auf ihre Ruhestellung.

Wegen der großen Variationsbreite der Arbeitsdurchmesser der mit einer solchen Werkzeugaufnahme verwendbaren Werkzeuge ist es erwünscht, das Gerät auf die dem Werkzeug jeweils zumutbaren Leistungen abzustimmen. Zu diesem Zweck sind die Verriegelungshülse und das Gerätegehäuse miteinander zugeordneten Sensorelementen versehen, die zusammenwirken, sobald sich die Verriegelungshülse in ihrer Ruhestellung befindet, um das Gerät auf die dem Werkzeug angemessene Leistung einzustellen. Eine werkzeugbezogene Leistungseinstellung am Gerät unterbleibt, wenn Werkzeuge in die Werkzeugaufnahme eingesetzt werden, die diese den Steuerelementen zugeordnete Ausnehmungen nicht aufweisen. Dann wird das Gerät mit einer standardisierten Betriebsdateneinstellung betrieben. Um differenzierte Einstellungen zu ermöglichen, können auch eine Mehrzahl von Sensoren in Verbindung mit mehreren Steuerelementen am Aufnahmekörper und mehreren diesen zugeordneten Ausnehmungen im Werkzeug vorgesehen sein. Der technische Aufwand für diese werkzeugbezogene Einstellung des Geräts ist also beträchtlich.

Die DE 36 37 128 A1 beschreibt eine automatische, werkzeugspezifische Betriebsdateneinstellung eines elektrischen Antriebsgeräts für auswechselbare Werkzeuge, bei welcher am Werkzeugschaft über dessen Umfang verteilt angebrachte, werkzeugspezifische Datenmarkierungen angebracht sind, die mit einer Lesevorrichtung zusammenwirken, die relativ zum Gerätegehäuse feststehend in die Werkzeugaufnahme des Antriebsgeräts eingebaut ist, so dass die Lesevorrichtung bei einer Relativbewegung zwischen Werkzeug und Arbeitsgerät ein elektrisches Signal erzeugt, das durch eine elektronische Auswerteeinrichtung das Antriebsgerät auf dem Werkzeug entsprechende Betriebsparameter einstellt. Die Datenmarkierungen können aus einer Folge von kerbenartigen Vertiefungen bestehen, die über den Umfang des Schaftes verteilt sind und durch auf Schaftdurchmesser stehengebliebene Stege getrennt sind, so dass sich wenigstens eine Datenspur bestehend aus einer Folge von zueinander gehörigen Vertiefungen und Stegen ergibt, der beispielsweise in der Lesevorrichtung ein induktiver Sensor oder ein optischer Sensor zugeordnet ist.

Eine Werkzeugmaschine nach der DE 196 29 623 A1 besitzt eine Werkzeugspindel, mit einer Aufnahme für ein Drehwerkzeug. Ein mehrstufiges Schaltgetriebe überträgt die Rotation einer Antriebswelle in einem durch die jeweils wirksame Getriebestufe bestimmten Drehzahlverhältnis auf die Werkzeugspindel. Das Drehwerkzeug ist mit einer mechanisch abtastbaren, eine gewünschte Arbeitsdrehzahl der Werkzeugspindel anzeigenden Kodierung versehen, durch eine Schaltmechanik des Schaltgetriebes, etwa einen axial zur Werkzeugspindel geführten Taststößel, abgetastet werden, so dass für den Bediener der Maschine keine Notwendigkeit besteht, sich jeweils über die gewünschte Drehzahl zu informieren und die Maschine entsprechend einzustellen.

Gemäß der DE 43 12 162 ist ein Elektrowerkzeug, insbesondere zum Sägen, Schleifen und Bohren, mit einem stationären Sensor ausgestattet, an dem sich das angetriebene Werkzeug, z. B. ein Sägeblatt, vorbeibewegt, so dass eine dem Sensor zugeordnete Markierung auf dem angetriebenen Werkzeug abgetastet werden kann und auf dieses Werkzeug bezogene Daten liefert, die von einer Steuerung während des Arbeitens mit dem Elektrowerkzeug verarbeitet werden, um die jeweils optimalen Betriebsparameter, insbesondere die Drehzahl, einzustellen. Die Markierungen können beispielsweise aus einer Folge von Erhöhungen, Vertiefungen, Durchbrechungen oder farblich kontrastierenden Kennzeichnungen auf der Werkzeugoberfläche bestehen. Die Abtastung durch den Sensor kann optisch, magnetisch, induktiv oder kapazitiv erfolgen.

Ein Beispiel für die Anwendung eines Transponders findet sich in der DE 35 41 676 A1. Allgemein zur Kennzeichnung und Identifizierung von Gegenständen, insbesondere aber von in Fertigungsprozessen benötigten Arbeitsmitteln wie Werkzeugen und Werkstückträgern, sind an diesen eine elektronisch lesbare Kennzeichnung aufweisende Module angeordnet. Eine Auswerteeinrichtung ist mit wenigstens einem Aufnehmer versehen, der die Kennzeichnung liest. Jeder Modul enthält wenigstens einen Schwingkreis zur Erzeugung einer für ihn kennzeichnenden Resonanzfrequenz- oder Frequenzkombination. Die am Gegenstand angeordneten Module sind entsprechend den für die Darstellung der Kennzeichnung des Gegenstandes im gewählten Code erforderlichen Elemente ausgewählt. Zur Halterung der Module kann beispielsweise jedem Modul eine Sacklochbohrung am Schaft eines Werkzeugs zugeordnet sein.

Auch die US-PS 4,742,470 beschreibt einen an einem zu identifizierenden Werkzeug eines automatisierten Werkzeugmaschinensystems angebrachten Transponder, der durch einen Empfänger abfragbar ist. Als Anwendungsgebiet sind durch Computer numerisch gesteuerte Werkzeugmaschinen, sog. CNC-Maschinen, vorgesehen, die Zugriff auf in einem Magazin untergebrachte Werkzeuge mit standardisiertem Werkzeugschaft haben. Die Maschinen können automatisch das erforderliche Werkzeug dem Magazin entnehmen und in die Antriebsspindel einsetzen, so dass eine programmierte Bearbeitung einer großen Zahl unterschiedlicher Teile ohne Eingriff einer Bedienungsperson ermöglicht wird. Der Transponder wird von einem Empfänger abgefragt, der vorzugsweise eine Lese- und Schreibfunktion aufweist. Der signalgespeiste Transponder schickt die in seinem Speicher enthaltene Information an den Empfänger zurück.

Im Prinzip könnten wenigstens einige der oben kurz dargestellten, bekannten Systeme bzw. Verfahrensweisen auch zur automatischen Bestimmung des Durchmesser eines scheibenförmigen Werkzeugs, insbesondere eines Sägeblatts, eingesetzt werden. Dies erfordert jedoch in jedem Fall Zusatzeinrichtungen, z. B. optische Sensoren, mechanische Abtasteinrichtungen oder magnetische bzw. elektromechanische Leseeinrichtungen. Die meisten bekannten Verfahren benötigen auch Zusatzelemente bzw. spezifische Abänderungen an den Werkzeugen selbst.

Der Erfindung liegt damit die Aufgabe zugrunde, ein Verfahren zur automatischen Bestimmung des Durchmessers eines rundscheibenartigen Werkzeugs, insbesondere eines Sägeblatts für eine automatische Wandsäge anzugeben, das keinerlei Vorkehrungen am Werkzeug selbst voraussetzt und mit in der Regel im Antriebsgerät ohnehin vorhandenen elektronischen Einrichtungen, insbesondere einer vorhandenen Recheneinheit in einer CPU auskommt.

Zur Lösung dieser Aufgabe nutzt die Erfindung zunächst den Gedanken bzw. die Erkenntnis, dass aus der Trägheit des Werkzeugs, insbesondere des Sägeblatts, auf dessen Durchmesser geschlossen werden kann. Dieser Zusammenhang ist als ein Schritt zur Erfindung in der nachfolgenden Tabelle 1 beispielhaft dargestellt.

Tabelle 1

| Durchmesser[m] | 1,2 | 1,4 | 1,6 | 1,8 | 2,0 | 2,2 | 2,4 |
|---|---|---|---|---|---|---|---|
| Trägheit [kgm$^2$] | 5,59 | 10,36 | 17,68 | 28,32 | 43,16 | 63,19 | 89,49 |

Es wird deutlich, dass die Trägheit sehr sensitiv schon auf kleine Durchmesseränderungen reagiert und dass deshalb der Rückschluß auf den Durchmesser im Prinzip fehlertolerant ist.

Die Erfindung wird nachfolgend in zwei Alternativlösungen vorgestellt. Zum einen besteht die Erfindung bei einem Verfahren zur automatischen Bestimmung des Durchmessers eines von einem Motor angetriebenen rundscheibenartigen Werkzeugs, insbesondere eines Sägeblatts für eine automatische Wandsäge in der Anwendung folgender Verfahrensschritte:

- Das Werkzeug wird mit einem definierten und konstanten Drehmoment $M_{Mot}$ beschleunigt. Dabei wird

- der Drehzahlverlauf $\omega(t)$ über der Zeit registriert, z. B. in genügend feinen Schritten in einem elektronischen Speicher, sodann wird

- ein Endwert $\overline{\omega}_{end}$ der dem Drehmoment $M_{Mot}$ entsprechenden Drehzahl bestimmt und der Reibungskoeffizient wird bestimmt aus

$$d_{tot} = \frac{M_{Mot}}{\overline{\omega}_{end}}$$

Dabei wird die Zeit $\tau$ ab Beginn der Motorbeschleunigung bis zum Erreichen des Bruchteils $(1-e^{-1}) = 63{,}21\ \%$ des Drehzahlendwerts $\overline{\omega}_{end}$ bestimmt, und anschließend

- wird die Trägheit des Werkzeugs bestimmt nach der Beziehung

$$\Theta_S = \tau \cdot d_{tot} - \Theta_R$$

wobei $\Theta_R$ die bekannte oder zuvor bestimmte Trägheit des Antriebs, d. h. des Rotors des Antriebsmotors und gegebenenfalls des Getriebes bezeichnet.

Aus der berechneten Trägheit des Werkzeugs wird sodann der Werkzeugdurchmesser aus einer vorgegebenen Vergleichstabelle oder -kurve bestimmt, die die Relation von Werkzeugträgheit $\Theta_S$ zu Werkzeugdurchmesser wiedergibt.

Es ist vorteilhaft, die Zeit oder die Zeitspanne t insbesondere bei einem bestimmten Bruchteil des Drehzahlwerts, nämlich bei dem Bruchteil $(1-e^{-1})$, das heißt bei 63,21 % des Drehzahl-Endwerts zu bestimmen, wobei die Berechnungsformel besonders einfach wird.

Gemäß einer zweiten grundsätzlichen Ausführungsvariante des erfindungsgemäßen Verfahrens zur automatischen Bestimmung des Durchmessers eines von einem Motor angetriebenen rundscheibenförmigen Werkzeugs, insbesondere eines Sägeblatts für eine automatische Wandsäge, sind folgende Verfahrensschritte vorgesehen:

- Zunächst wird das Werkzeug mit einem definierten und konstanten Drehmoment $M_{Mot}$ beschleunigt;

- der Drehzahlverlauf $\omega(t_n)$ über der Zeit wird in feinen Schritten registriert, insbesondere in einem Speicher bis eine konstante Drehzahl $\omega_{end}$ erreicht ist;

- ein Reibungskoeffizient wird mit der Beziehung

$$\overline{d}_{tot} = \frac{M_{Mot}}{\overline{\omega}_{end}}$$

errechnet, wobei $\overline{\omega}_{end}$ der durchschnittlichen Drehzahl für die letzten, beispielsweise 3 bis 30 Datenpunkte der Registrierung des Drehzahlverlaufs entspricht mit

$$\overline{\omega}_{end} = \frac{1}{(n_{end} - n_0)} \sum_{k = n_0}^{n_{end}} \omega_k \text{ mit } n = n_0, n_1, ..., n_{end}$$

für $t > t_{n0}$ und $\omega_n = \omega_{end}$, sodann

• Bestimmen der Zeitkonstanten $\overline{\tau}$ der Steigung des Drehzahlverlaufs für die Werte vor den letzten Datenpunkten; und

• Berechnen der Trägheit des Werkzeugs mit der Formel

$$\Theta_S = \overline{\tau} \cdot \overline{d}_{tot} - \Theta_R.$$

wobei $\Theta_R$ die bekannte oder zuvor bestimmte Trägheit des Antriebs bezeichnet.

• Bestimmen des Werkzeugdurchmessers aus einer vorgegebenen Vergleichstabelle oder -kurve der Relation von Werkzeugträgheit $\Theta_S$ zu Werkzeugdurchmesser.
Die Zeitschritte des Drehzahlverlaufs werden beispielsweise in einem Abstand von 50 bis 500 ms, d. h. mit 20 bis 200 Werten pro Registrierungsvorgang gewählt.

Die Erfindung und vorteilhafte Einzelheiten werden nachfolgend unter Bezug auf die Zeichnungen in beispielsweisen Ausführungsformen näher erläutert. Es zeigen:

Fig. 1 eine schematische Modellierung eines Werkzeugs, insbesondere eines Sägeblattantriebs als Zwei-Massen-Schwinger;

Fig. 2 ein Diagramm des Beschleunigungsverlaufs bei der Bestimmung der Werkzeugträgheit gemäß der ersten grundsätzlichen Lösungsvariante der Erfindung; und

Fig. 3 die isometrische Darstellung des prinzipiellen Aufbaus eines Sägeblattantriebs für eine Wandsäge.

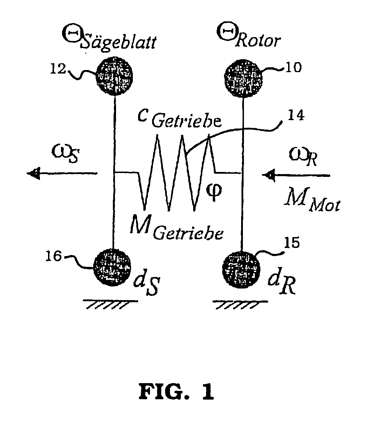

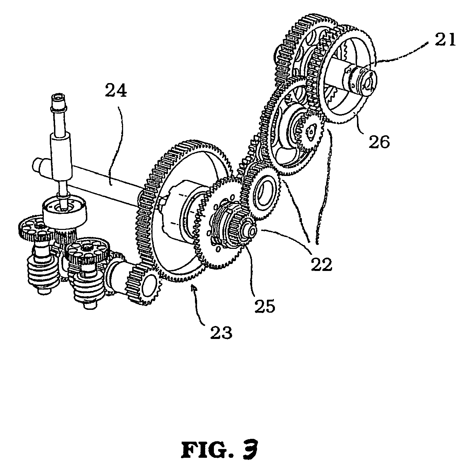

Als Ausgangspunkt für die Erläuterung der Erfindung wird zunächst als Gerätebeispiel anhand der Fig. 3 ein Sägeblattantrieb einer Wandsäge kurz erläutert.
Der Sägeblattantrieb umfasst einen Motor (nicht gezeigt) der über seine Motorwelle 24 auf ein Planetengetriebe 23 und ein nachgeschaltetes dreistufiges Stirnradgetriebe 22 wirkt. Zwischen dem Motor und dem Planetengetriebe 23, zwischen dem Planetengetriebe 23 und dem ersten Stirnrad 25, sowie zwischen dem letzten Stirnrad 26 und dem Sägeblatt sind jeweils (nicht näher bezeichnete) Wellen als Übertragungsglieder eingebaut. Das nicht dargestellte Sägeblatt wird auf ein nach außen ragendes Ende 21 der letzten Welle des Antriebsstrangs auswechselbar aufgesetzt.
Ein mögliches Modell eines Sägeblattantriebs zeigt Fig. 1 dargestellt als einen Zwei-Massen-Schwinger. Der anhand von Fig. 3 dargestellte Antriebsstrang wird dabei als in der Mitte, insbesondere an der Stelle mit der größten Elastizität, getrennt gedacht, wobei die Trägheitsmassen in zwei diskreten Punkten als Masse 10 und Masse 12 zusammengefasst werden. Die Elastizitäten von Wellen und Getrieben werden ebenfalls in einem Punkt zusammengefasst und ergeben eine Drehfeder 14. Zusätzlich zu berücksichtigen sind gegebenenfalls eine mit Bezugshinweis 15 gekennzeichnete Reibung bzw. ein Reibwert $d_R$ im Antriebsstrang und eine durch Bezugshinweis 16 angegebene Reibung bzw. ein Reibwert $d_S$ am Werkzeug, nämlich insbesondere am Sägeblatt. Diese Reibungen wirken gegebenenfalls auf die beiden Trägheitsmassen 10 bzw. 12.

Die dominanten Trägheitsmassen sind dabei diejenigen des Rotors des Motors $\Theta_R$ bzw. diejenige des Werkzeugs, insbesondere des Sägeblatts $\Theta_{Sägeblatt}$ bzw. $\Theta_S$. Die dominante Elastizität wird diejenige der Welle zwischen der letzten Getriebestufe und dem Sägeblatt sein. Dieses Modell lässt sich mit der folgenden Systemgleichung beschreiben:

$$\frac{d}{dt}\begin{bmatrix}\varphi(t)\\ \omega_R(t)\\ \omega_S(t)\end{bmatrix}=\begin{bmatrix}0 & 1 & -1\\ -c_G/\Theta_R & d_R/\Theta_R & 0\\ c_G/\Theta_S & 0 & -d_S/\Theta_S\end{bmatrix}\cdot\begin{bmatrix}\varphi(t)\\ \omega_R(t)\\ \omega_S(t)\end{bmatrix}+\begin{bmatrix}0\\ 1/\Theta_R\\ 0\end{bmatrix}\cdot M_{Mot}(t) \tag{1}$$

$$\begin{bmatrix}M_G(t)\\ \omega_R(t)\end{bmatrix}=\begin{bmatrix}c_G & 0 & 0\\ 0 & 1 & 0\end{bmatrix}\cdot\begin{bmatrix}\varphi(t)\\ \omega_R(t)\\ \omega_S(t)\end{bmatrix}$$

Die in der Systemgleichung (1) angegebenen Größen haben folgende Bedeutung

$\varphi(t)$      Drehwinkel in Abhängigkeit von der Zeit

$\omega_R(t)$      Drehgeschwindigkeit bzw. Drehzahl des Rotors in Abhängigkeit von der Zeit

$\omega_S(t)$      Drehgeschwindigkeit bzw. Drehzahl des Werkzeugs (Sägeblatts)

$c_G$      Steifigkeit des Getriebes

$\Theta_R$      Trägheit des Rotors

$\Theta_S$      Trägheit des Werkzeugs (Sägeblatts)

$d_R$      Reibung des Rotors, gegebenenfalls plus der Reibung des Getriebeteils, welcher der Rotorseite zuzuordnen ist

$d_S$      Reibung des Werkzeugs (Sägeblatts) gegebenenfalls plus der Reibung des der Werkzeugseite zugeordneten Getriebes

$M_{Mot}(t)$      Motordrehmoment in Abhängigkeit von der Zeit

$M_G(t)$      Getriebemoment in Abhängigkeit von der Zeit.

Dargestellt als Übertragungsfunktion ergibt sich für das Getriebemoment

$$M_G(s) \quad \frac{s\Theta_S c_G + d_S c_G}{s^3\Theta_R\Theta_S + s^2(\Theta_R d_S + \Theta_S d_R) + s(d_R d_S + c_G(\Theta_S + \Theta_R)) + c_G(d_S + d_R)} M_{Mot}(s) \tag{2}$$

Für die Drehzahl des Rotors gilt

$$\omega_R(s) = \frac{s^2\Theta_S + sd_S + c_G}{s^3\Theta_R\Theta_S + s^2(\Theta_R d_S + \Theta_S d_R) + s(d_R d_S + c_G(\Theta_S + \Theta_R)) + c_G(d_S + d_R)} M_{Mot}(s) \tag{3}$$

In der Übertragungfunktion gemäß Gleichung (2) bzw. (3) gilt für s = j2$\pi f$, wobei $f$ die Frequenz bezeichnet mit der das Drehmoment $M_{MOT}$ verändert wird..

Die Trägheit $\Theta_S$ des Werkzeugs (des Sägeblatts) ist abhängig vom Werkzeugdurchmesser und damit unbekannt. Ebenso unbekannt ist die Reibung $d_S$, welche auf das Werkzeug wirkt, da dieses frei und damit keiner Reibung unterworfen oder bereits stark belastet, beispielsweise in einem Sägeschlitz eingeklemmt sein kann.

Als Basis für die erste grundsätzliche Variante der erfindungsgemäßen Lösung wird der Werkzeugantrieb bzw. insbesondere der Wandsägeantrieb durch eine Differentialgleichung erster Ordnung beschrieben:

$$\frac{d}{dt}\omega_R(t) = d_{tot}/\left(\Theta_R + \Theta_S\right)\cdot\omega_R(t) + 1/\left(\Theta_R + \Theta_S\right)\cdot M_{Mot}(t) \qquad (4)$$

mit der Motordrehzahl $\omega_R$ der auf das Werkzeug und den Antrieb wirkenden Reibung $d_{tot}$, der Trägheit des Antriebs (Motor und Getriebe) $\Theta_R$ und der Trägheit des Sägeblatts $\Theta_S$ sowie dem Motordrehmoment $M_{Mot}$. Sämtliche Größen sind hierbei mit den Übersetzungsverhältnissen auf eine Seite des Getriebes, z. B. auf die Motorseite, umgerechnet. Dieses Modell gilt unter der zulässigen Annahme, dass die Übertragungsglieder steif sind.

Wird der Motor mit einem konstanten Drehmoment betrieben, ergibt sich die Lösung der Differentialgleichung (9) zu:

$$\omega_R = \frac{M_{Mot}}{d_{tot}}\left(1 - e^{t/\tau}\right)$$

$$\tau = \frac{\Theta_R + \Theta_S}{d_{tot}} \qquad (5)$$

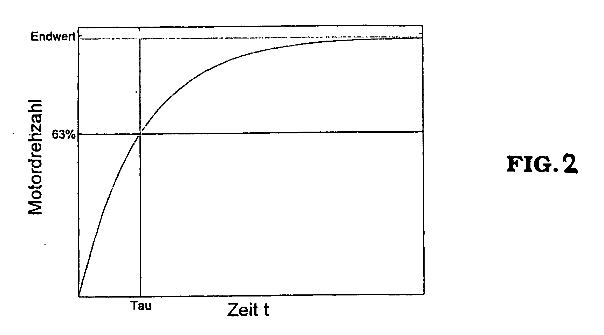

Fig. 2 zeigt den zeitlichen Verlauf dieses Beschleunigungsvorgangs. Die Drehzahl $\omega(t)$ geht dabei asymptotisch gegen einen Endwert von $M_{Mot}/d_{tot}$.

Nach der Zeit $\tau$ wird ein Wert von 63,21 % erreicht (vgl. Fig. 2). Zusammenfassend werden bei dieser ersten grundsätzlichen Ausführungsvariante der Erfindung zur Bestimmung des Sägeblattdurchmessers folgende Verfahrensschritte durchgeführt:

• Beschleunigen des Sägeblatts mit einem definierten und konstanten Drehmoment $M_{Mot}$;

• Registrieren, z. B. Aufzeichnen des Verlaufs der Drehzahl ($\omega_R$) und der zugehörigen Zeit in feinen Zeitschritten in einem Speicher;

• Berechnen des Koeffizienten der auf das Werkzeug und den Antrieb wirkenden Reibung ($d_{tot}$) nach der Gleichung

$$d_{tot} = \frac{M_{Mot}}{\text{gemessener Endwert der Drehzahl}};$$

• Bestimmen der Zeit $\tau$, bei der 63,21% des Endwerts der Drehzahl erreicht wird;

• Berechnen der Trägheit des Werkzeugs nach der Gleichung

$$\Theta_S = \tau \cdot d_{tot} - \Theta_R;$$

• Bestimmen des der berechneten Werkzeugträgheit zuzuordnenden Werkzeugdurchmessers.

Bei der zweiten grundsätzlichen Ausführungsvariante der Erfindung wird ein Modell einer linearen Regression zugrundegelegt. Dieses Verfahren umfasst im Wesentlichen folgende Schritte:

- Beschleunigen des Werkzeugs mit einem definierten und konstanten Drehmoment $M_{Mot}$;

- Aufzeichnen des Drehzahlverlaufs $\omega_n = \omega(t_n)$ und der zugehörigen Zeit, vorzugsweise in genügend feinen Zeitschritten $t_n$ in einem Speicher;

- Abwarten bis die Drehzahl $\omega$ konstant ist und Beenden der Datenaufzeichnung;

- Benutzen der letzten Datenpunkte, z. B. der letzten 3 bis letzten 30 Datenpunkte zur Berechnung des Reibungskoeffizienten $d_{tot}$ gemäß:

$$\overline{\omega}_{end} = \frac{1}{(n_0)} \sum_{k=n_0}^{n_{end}} \omega_k \quad \text{für } n = n_0 \ldots n_{end} \quad ( \text{für } t > t_0 , \; \omega_n = \omega_{end} ) \tag{6}$$

$$\overline{d}_{tot} = \frac{M_{Mot}}{\overline{\omega}_{end}} \tag{7}$$

Die gemessenen Datenpaare für einen Zeitwert $t_n$ bzw. Drehzahlwert $\omega n$ genügen nun folgenden Gleichungen:

$$y_n = 1_n \left( 1 - \frac{\omega_n}{\omega_{end}} \right) = \frac{-t_n}{\tau} = m \cdot x_n \tag{8}$$

Diese Gleichung stellt eine Gerade durch den Ursprung eines karthesischen Koordinatenkreuzes mit der Abszisse x und der Ordinate y mit der Steigung

$$m = \frac{-1}{\tau} \, dar.$$

- Über eine lineare Regression lassen sich die Steigung dieser Geraden und damit die Zeitkonstante $\tau$ und das Trägheitsmoment und damit der Radius des Werkzeugs bestimmen:

$$m = \frac{-1}{\tau} = \frac{\sum x_n \cdot y_n}{\sum (x_n)^2} \tag{9}$$

$$\Theta_R + \Theta_S = \overline{\tau} \cdot \overline{d}_{tot} . \tag{10}$$

Durch die anhand von zwei Ausführungsvarianten dargestellten Erfindung lässt sich auf einfache Weise ohne zusätzlichen Hardwareaufwand eine automatische Bestimmung der Trägheit eines scheibenförmigen Werkzeugs, insbesondere eines Sägeblatts für eine automatische Wandsäge und daraus folgend eine Bestimmung des Durchmessers erreichen, so dass eine Optimierung des Werkzeugantriebs auf ein jeweils gewähltes Werkzeug in einem automatischen Einstellvorgang gewährleistet werden kann. Insbesondere bei Anwendung der Erfindung bei Wandsägen lässt sich damit die Schnittlänge und Schnitttiefe auf einfache Weise bestimmen.

**Patentansprüche**

1. Verfahren zur automatischen Bestimmung des Durchmessers eines von einem Motor angetriebenen rundscheibenförmigen Werkzeugs, insbesondere eines Sägeblatts für eine automatische Wandsäge mit folgenden Schritten:

   (a) Beschleunigen des Werkzeugs mit einem definierten und konstanten Drehmoment $M_{Mot}$;
   (b) Registrieren des Drehzahlverlaufs $\omega(t)$ über der Zeit:
   (c) Bestimmen eines Endwerts $\overline{\omega}_{end}$ der dem Drehmoment $M_{Mot}$ entsprechenden Drehzahl und Berechnen des Reibungskoeffizienten

$$d_{tot} = \frac{M_{Mot}}{\overline{\omega}_{end}}$$

   (d) Bestimmen der Zeit $\tau$ ab Beginn der Motorbeschleunigung bis zum Erreichen von $(1-e^{-1})$ Bruchteils des Drehzahlendwerts $\overline{\omega}_{end}$;
   (e) Berechnen der Trägheit des Werkzeugs mit

$$\Theta_S = \tau \cdot d_{tot} - \Theta_R$$

   wobei $\theta_R$ die bekannte oder zuvor bestimmte Trägheit des Rotors des Antriebsmotors gegebenenfalls einschließlich des Getriebes bezeichnet;
   (f) Bestimmen des Werkzeugdurchmessers aus einer vorgegebenen Vergleichstabelle oder -kurve der Relation von Werkzeugträgheit $\Theta_S$ zu Werkzeugdurchmesser.

2. Verfahren nach Anspruch 1, **dadurch gekennzeichnet, dass** der Drehzahlverlauf über der Zeit in Schritten $\omega_n = w(t_n)$; n = 0, 1, 2, 3, ... in einem Speicher aufgezeichnet wird.

3. Verfahren zur automatischen Bestimmung des Durchmessers eines von einem Motor angetriebenen rundscheibenförmigen Werkzeugs, insbesondere eines Sägeblatts für eine automatische Wandsäge mit folgenden Schritten:

   (a) Beschleunigen des Werkzeugs mit einem definierten und konstanten Drehmoment $M_{Mot}$;
   (b) Registrieren des Drehzahlverlaufs $\omega(t_n)$ über der Zeit in feinen Zeitschritten, bis eine konstante Drehzahl $\omega_{end}$ erreicht ist:
   (c) Berechnen eines Reibungskoeffizienten mit

$$\overline{d}_{tot} = \frac{M_{Mot}}{\overline{\omega}_{end}}$$

   wobei $\overline{\omega}_{end}$ der durchschnittlichen Drehzahl für die letzten Datenpunkte der Registrierung des Drehzahlverlaufs entspricht mit

$$\overline{\omega}_{end} = \frac{1}{(n_{end} - n_0)} \sum_{k=n_0}^{n_{end}} \omega_k \text{ mit } n = n_0, n_1, ..., n_{end}$$

für t > $t_{nO}$ und $\omega_n$ = $\omega_{end}$;

(d) Bestimmen der Zeitkonstante $\bar{\tau}$ der Steigung des Drehzahlverlaufs für Datenpunkte, die vor den für die Bestimmung des Reibungskoeffizienten $\bar{d}$ tot verwendeten letzten Datenpunkten liegen:

(e) Berechnen der Trägheit des Werkzeugs mit der Formel

$$\Theta_S = \bar{\tau} \cdot \bar{d}_{tot} - \Theta_R,$$

wobei $\Theta_R$ die bekannte oder zuvor bestimmte Trägheit des Rotors des Antriebsmotors gegebenenfalls einschließlich des Getriebes liegen;

(f) Bestimmen des Werkzeugdurchmessers aus einer vorgegebenen Vergleichstabelle oder -kurve der Relation von Werkzeugträgheit $\Theta_S$ zu Werkzeugdurchmesser.

## Claims

1. Method of automatically determining the diameter of a motor-driven circular-disc-shaped tool, in particular a saw blade for an automatic wall saw, with the following steps:

   (a) acceleration of the tool with a defined and constant torque $M_{Mot}$;
   (b) recording of the curve of rotational speed $\omega(t)$ over time;
   (c) determination of a final value $\bar{\omega}_{end}$ of the rotational speed corresponding to the torque $M_{Mot}$ and calculation of the friction coefficient

$$d_{tot} = \frac{M_{Mot}}{\bar{\omega}_{end}}$$

   (d) determination of the time $\tau$ from commencement of motor acceleration to attainment of the fraction $(1-e^{-1})$ of the final rotational speed value $\bar{\omega}_{end}$;
   (e) calculation of the inertia of the tool with

$$\Theta_S = \tau \cdot d_{tot} - \Theta_R$$

   where $\Theta_R$ denotes the known or previously determined inertia of the rotor of the drive motor, including the gear if any;
   (f) determination of the tool diameter from a prescribed comparative table or curve of the relation of tool inertia $\Theta_s$ to tool diameter.

2. Method according to Claim 1, **characterized in that** the curve of rotational speed over time is recorded in a memory in steps $\omega_n$ = $\omega(t_n)$; n = 0, 1, 2, 3, ...

3. Method of automatically determining the diameter of a motor-driven circular-disc-shaped tool, in particular a saw blade for an automatic wall saw, with the following steps:

   (a) acceleration of the tool with a defined and constant torque $M_{Mot}$;
   (b) recording of the curve of rotational speed $\omega(t_n)$ over time in small time increments until a constant rotational speed $\omega_{end}$ is attained;
   (c) calculation of a friction coefficient with

$$\bar{d}_{tot} = \frac{M_{Mot}}{\bar{\omega}_{end}}$$

where $\overline{\omega}_{end}$ corresponds to the average rotational speed for the last data points of the recording of rotational speed with

$$\overline{\omega}_{end} = \frac{1}{(n_{end} - n_0)} \sum_{k=n_0}^{n_{end}} \omega_k \quad \text{mit } n = n_0, n_1, ..., n_{end}$$

for $t > t_{n0}$ and $\omega_n = \omega_{end}$;

(d) determination of the time constant $\overline{\tau}$ of the slope of the rotational speed curve for data points which come before the last data points used for the determination of the friction coefficient $\overline{d}_{tot}$;

(e) calculation of the inertia of the tool with the formula

$$\Theta_S = \overline{\tau} \cdot \overline{d}_{tot} - \Theta_R$$

where $\Theta_R$ [denotes] the known or previously determined inertia of the rotor of the drive motor, including the gear if any;

(f) determination of the tool diameter from a prescribed comparative table or curve of the relation of tool inertia $\Theta_s$ to tool diameter.

## Revendications

1. Procédé pour déterminer automatiquement le diamètre d'un outil en forme de disque circulaire, entraîné par un moteur, en particulier une lame de scie pour une scie murale automatique, comportant les étapes suivantes consistant à :

   (a) accélérer l'outil en appliquant un couple $M_{Mot}$ défini et constant,

   (b) enregistrer la courbe de vitesse de rotation $\omega(t)$ en fonction du temps,

   (c) déterminer une valeur finale $\overline{\omega}_{end}$ de la vitesse de rotation correspondant au couple $M_{Mot}$ et calculer le coefficient de frottement :

$$d_{tot} = \frac{M_{Mot}}{\overline{\omega}_{end}}$$

   (d) déterminer la période de temps T depuis le début de l'accélération du moteur jusqu'à ce que la fraction $(1-e^{-1})$ de la valeur finale de la vitesse de rotation $\overline{\omega}_{end}$ soit atteinte,

   (e) calculer l'inertie de l'outil d'après :

$$\theta_S = \tau \cdot d_{tot} - \theta_R$$

   où $\theta_R$ représente l'inertie connue ou prédéterminée du rotor du moteur d'entraînement, y compris le bloc d'engrenages le cas échéant,

   (f) déterminer le diamètre d'outil à partir d'une table ou d'une courbe de comparaison prédéfinie de la relation entre l'inertie d'outil $\theta_s$ et le diamètre d'outil.

2. Procédé selon la revendication 1, **caractérisé en ce qu'**il comporte l'étape consistant à enregistrer la courbe de vitesse de rotation en fonction du temps dans une mémoire, par incréments $\omega_n = \omega(t_n)$ ; n = 0, 1, 2, 3...

3. Procédé pour déterminer automatiquement le diamètre d'un outil en forme de disque circulaire, entraîné par un moteur, en particulier une lame de scie pour une scie murale automatique, comportant les étapes suivantes consistant à :

(a) accélérer l'outil en appliquant un couple $M_{Mot}$ défini et constant,

(b) enregistrer la courbe de vitesse de rotation $\omega(t_n)$ en fonction du temps par petits incréments temporels jusqu'à ce qu'une vitesse de rotation constante $\omega_{end}$ soit atteinte,

(c) calculer un coefficient de frottement par :

$$\overline{d}_{tot} = \frac{M_{Mot}}{\overline{\omega}_{end}}$$

où $\overline{\omega}_{end}$ correspond à la vitesse de rotation moyenne pour les derniers points de données de l'enregistrement de la courbe de vitesse de rotation, avec :

$$\overline{\omega}_{end} = \frac{1}{\left(n_{end} - n_0\right)} \sum_{k=n_0}^{n_{end}} \omega_k \quad \text{avec} \quad n = n_0, \ n_1, \ \ldots, \ n_{end}$$

pour $t > t_{n0}$ et $\omega_n = \omega_{end}$,

(d) déterminer la constante de temps $\overline{\tau}$ de la pente de la courbe de vitesse de rotation pour les points de données situés avant les derniers points de données utilisés pour déterminer le coefficient de frottement $\overline{d}_{tot}$,

(e) calculer l'inertie de l'outil avec la formule :

$$\theta_S = \overline{\tau} \ . \ \overline{d}_{tot} - \theta_R$$

où $\theta_R$ représente l'inertie connue ou prédéterminée du rotor du moteur d'entraînement, y compris le bloc d'engrenages le cas échéant,

(f) déterminer le diamètre d'outil à partir d'une table ou d'une courbe de comparaison prédéfinie de la relation entre l'inertie d'outil $\theta_s$ et le diamètre d'outil.

$\Theta_{S\ddot{a}geblatt}$

$\Theta_{Rotor}$

12

10

$c_{Getriebe}$

14

$\omega_S$

$\omega_R$

$\varphi$

$M_{Mot}$

$M_{Getriebe}$

16

15

$d_S$

$d_R$

**FIG. 1**

**FIG.2**

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3720512 A1
- DE 3721771 A1
- DE 3637128 A1
- DE 19629623 A1
- DE 4312162
- DE 3541676 A1
- US 4742470 A